(19) Europäisches Patentamt
European Patent Office
Office européen des brevets

(11) Publication number: 0 374 997 A2

(12) **EUROPEAN PATENT APPLICATION**

(21) Application number: 89203036.2

(51) Int. Cl.[5]: C08G 61/08, B01J 31/14

(22) Date of filing: 29.11.89

(30) Priority: 30.11.88 US 278101

(43) Date of publication of application:
27.06.90 Bulletin 90/26

(84) Designated Contracting States:
AT BE CH DE ES FR GB GR IT LI LU NL SE

(71) Applicant: SHELL INTERNATIONALE RESEARCH MAATSCHAPPIJ B.V.
Carel van Bylandtlaan 30
NL-2596 HR Den Haag(NL)

(72) Inventor: Kelsey, Donald Ross
4706 Lake Village Drive
Fulshear Texas 77441(US)

(74) Representative: Aalbers, Onno et al
P.O. Box 302
NL-2501 CH The Hague(NL)

(54) **Polymerization of cyclic olefins.**

(57) A catalyst and process for the polymerization of cyclic olefins, such as dicyclopentadiene, are disclosed. The catalyst includes a transition metal compound, a co-catalyst and a boron halide promoter. Polymerization can be carried out in a reaction injection moulding process to prepare a thermoset moulded article having high Tg and superior flexural strength.



Xerox Copy Centre

## POLYMERIZATION OF CYCLIC OLEFINS

This invention relates to the polymerization of cyclic olefins. In one embodiment, the invention relates to a catalyst for the reaction injection moulding of dicyclopentadiene. In another aspect, the invention relates to a dicyclopentadiene polymer having superior flexural strength.

Cyclic olefins are subject to ring-opening metathesis polymerization to produce thermoset polymers having physical properties making them suitable for structural and electronic applications, such as moulded car parts and electrical laminates. Such polymerizations are commonly carried out in reaction injection moulding (RIM) processes, in which the metathesis catalyst and the monomer are charged to a heated mould and polymerization of the monomer and forming of the polymer into the desired shape are carried out simultaneously in the mould.

In such RIM processes, it is important that the polymerization reaction occur rapidly and with as complete incorporation of the charged monomers as possible. It has been found in moulding poly-(dicyclopentadiene), for example, that the presence of unreacted monomers results in a moulded part having a very unpleasant odour and less than optimum physical properties. In commercial RIM processes, it is economically desirable that the process be carried out in as short a cycle time as possible and at starting mould temperatures at or near room temperature. It is also advantageous to be able to use an impure monomer stream and thus avoid extensive purification of the monomer prior to polymerization.

One metathesis catalyst system which has been successfully used in RIM processes is the combination of a phenol-treated transition metal salt, such as $WOCl_4$ or $WCl_6$, and a co-catalyst such as an aluminium or tin compound. In particular, a phenol-substituted tungsten combined with a tin hydride has been found highly efficient for monomer incorporation into the polymer. This catalyst also is highly active in a relatively impure dicyclopentadiene feed stream. It would be desirable to further reduce the cycle time and polymerization temperature for RIM processes catalyst by this and other transition metal catalysts. It would also be desirable to reduce the amount of the costly tungsten and tin components of the catalyst without sacrificing catalyst activity. It would further be desirable to improve the properties, such as flexural strength, of a dicyclopentadiene polymer.

It is therefore an object of this invention to provide an improved catalyst for the polymerization of cyclic olefins. In one embodiment, it is an object of the invention to provide a reaction injection moulding process in which dicyclopentadiene is polymerized rapidly at relatively low mould temperatures. In a further embodiment, it is an object of the invention to provide a dicyclopentadiene polymer having superior flexural strength.

According to the invention, a process and catalyst for the polymerization of cyclic olefins are provided, wherein a cyclic olefin is polymerized in the presence of a catalyst comprising (a) a transition metal compound, (b) a co-catalyst, and (c) a boron halide compound.

The transition metal is preferably, because of the high activity of the resulting catalyst for dicyclopentadiene polymerization, molybdenum or tungsten. The transition metal compound (or starting material therefor) is generally in the form of a salt, including such salts as halides, including oxyhalides. Suitable halides include chloride, bromide and fluoride. The transition metal halide is preferably one in which the halide is present in a molar amount of at least three atoms per atom of transition metal. Examples of such transition metal halides include molybdenum oxytetrachloride, molybdenum oxytrichloride, molybdenum trioxyhexachloride, molybdenum trioxypentachloride, molybdenum oxytetrafluoride, tungsten hexachloride, tungsten oxytetrachloride, and tungsten oxytetrabromide. The preferred transition metal compounds, because of their high activity for dicyclopentadiene polymerization, are tungsten hexachloride, tungsten oxytetrachloride, molybdenum oxytrichloride, and mixtures thereof. The transition metal compound will generally be present in the polymerization reaction mixture in an amount of from 0.001 to 5, preferably of from 0.005 to 1, most preferably of from 0.01 to 0.1 mole per cent, based on moles of cyclic olefin monomer present.

The transition metal compound preferably includes the reaction product of the above transition metal salt with an alcohol or phenol for solubilization and enhanced activity of the transition metal salt. The solubilizing compound can be, for example, phenol or an aryl-, or alkyl-substituted phenol such as o-, m- and p-cresol; 2-, 3-, and 4-ethylphenol; 2-, 3-, and 4-propylphenol; 2-, 3-, and 4-isopropylphenol; 2-, 3-, and 4-butylphenol; 2-, 3-, and 4-tertbutylphenol; 2-, 3-, and 4-phenylphenol; 2,4-, and 2,6-diisopropylphenol; 2,4-, and 2,6-diisobutylphenol; 2,4-, and 2,6-di-tertbutylphenol; 2,6-di-tertbutyl-4-methylphenol; 2,4-, and 2,6-diphenylphenol. The phenol can be a halophenol such as, for example, 2-, 3-, and 4-fluorophenol; 2,3-, 2,4-, 2,5-, 2,6-, 3,4-, and 3,5-difluorophenol; 2,3,4-, 2,3,5-, 2,3,6-, 3,4,5-, 2,4,5-, and 2,4,6-trifluorophenol; 2,3,4,5-, 2,4,5,6-, and 2,3,5,6-tetrafluorophenol; pentafluorophenol; and the corresponding bromo- and chlorophenols.

The phenol can be a haloalkyl-substituted phenol such as, for example, 3-trifluoromethylphenol, 2-trichloromethylphenol, 4-trifluoromethylphenol, 2-trifluoromethylphenol, 3-chlorodifluoromethylphenol, 3-dichlorofluoromethylphenol and 3-tribromomethylphenol. Suitable alcohols include, for example, ethanol, isopropanol, t-butanol, octadecanol and the like. Mixtures of such alcohols and phenols can also be used.

The phenol will generally be present in the catalyst in an amount of from 1 to 3 moles per mole of the transition metal, preferably of from 1.5 to 2.5 moles. The reaction product, or aryloxy-substituted transition metal compound, can be prepared, for example, by contacting, under an oxygen-free inert atmosphere, the alcoholic or phenolic compound and the transition metal compound in an inert organic liquid with mild heat and removal of generated hydrogen halide. Suitable inert organic liquids for the reaction include, for example, cyclopentane, cyclohexane, benzene, toluene, xylene, chlorobenzene and dichlorobenzene. The inert organic liquid is then preferably distilled off under vacuum, and the solid residue is dissolved in dry, degassed cyclic olefin monomer.

The catalyst component can be used in combination with one or more co-catalyst compounds. Such co-catalysts can include, for example, an organoaluminium compound, including trialkylaluminium, alkylaluminium dihalides, dialkylaluminium halides, or alkyl(alkyloxy)aluminium halides, or an organotin hydride compound, the latter including compounds which can be represented by the formula $Sn(R)_3H$, in which each R is selected independently from hydrogen, substituted or unsubstituted aryl, or $C_{1-20}$ alkyl Specific examples of such co-catalysts include ethylaluminium chloride, diethylaluminium chloride, tributyltin hydride, tripentyltin hydride, diphenyltin dihydride, trioctyltin hydride, methyldicyclohexyltin hydride, cyclopentyldimethyltin hydride, triphenyltin hydride and phenyldimethyltin hydride. Substituents on the R groups in the above formula can include, for example, $C_{1-20}$ alkoxy and halides.

The amount of the co-catalyst present in the catalyst composition will vary depending upon the specific components present and the reaction conditions. In general, a tin-containing co-catalyst will be present in a molar amount of from 15:1 to 1:1, preferably of from 8:1 to 2:1, based on moles of transition metal in the catalyst, while an organoaluminium halide will generally be present in a molar ratio of from 8:1 to 1:1.

The catalyst system may include a moderator to delay the initiation of polymerization if the selected catalyst and co-catalyst cause instant polymerization upon contact. Ethers, esters, ketones, nitriles and polar cyclic olefins are among suitable moderators for catalyst systems made up of tungsten catalysts and alkylaluminium halide co-catalysts. Ethylbenzoate, butylether bi(2-methoxyethyl)ether and polar cyclic olefins are preferred moderators. Moderators are generally not necessary for catalyst systems having a tin hydride co-catalyst.

The invention catalyst includes a boron halide promoter, including boron trihalides, boron trihalide complexes and tetrahaloborates. The promoter can be, for example, such boron halides as boron tribromide, boron trifluoride, boron trifluoride diethylether complex, boron trifluoride dibutylether complex, boron trifluoride ethylamine, tetrafluoroboric acid diethylether, methylboron difluoride, phenylboron dichloride, triphenylmethylfluoroborate, ammonium tetrafluoroborate, bis(2-ethyl-1 hexyl)ammonium tetrafluoroborate, boron trichloride dimethylsulphide, boron trifluoride alcohol complexes, and the like. The boron compound will be present in the polymerization reaction mixture in an amount effective to promote polymerization of the cyclic olefin monomer, generally of from 0.001 to 10 moles, preferably of from 0.05 to 2 moles, per mole of transition metal. Preferred boron halides, because of their high activity and stability, are boron trifluoride and its ethylether and butylether complexes.

The preferred catalyst composition of the invention includes an aryloxy-substituted tungsten or molybdenum oxychloride catalyst, optionally combined with an aryloxy-substituted tungsten hexachloride or molybdenum pentachloride, a tributyl-, or triphenyltin hydride co-catalyst, and a boron trifluoride complex promoter. This catalyst has been found to exhibit high activity in the polymerization of dicyclopentadiene and high monomer conversion in a reaction injection moulding process having a short induction time and relatively low polymerization temperature.

The above catalyst composition is preferably prepared by reacting about two moles of a substituted phenol with one mole of tungsten hexachloride or tungsten oxytetrachloride, or a mixture thereof, in a dry inert solvent such as toluene at a temperature within the range of from 25 to 95 °C under oxygen-free argon. Hydrogen chloride by-product is swept out of the reaction and the toluene is distilled off under vacuum. The reaction product is conveniently dissolved in dry, degassed dicyclopentadiene or other liquid monomer to be polymerized, to make a solution of 2 to 10 weight per cent in bisphenoxytungsten compound, which can be diluted with additional monomer to achieve the desired concentration of catalyst. The tin co-catalyst is generally combined with the transition metal catalyst in the reaction mixture as a solution of the monomer to be polymerized. The boron halide promoter is generally combined with the transition metal and/or tin co-catalyst solution.

The polymerization process of the invention involves contacting one or more cyclic olefin monomers

with the transition metal component in the presence of the co-catalyst and the boron halide promoter.

Suitable cyclic olefin monomers and comonomers include those of the norbornene type which can be represented by the structural formulae

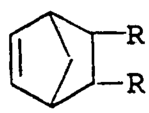

and

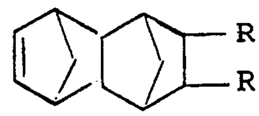

in which each R is selected independently from hydrogen, $C_{1-20}$ alkyl, $C_{1-20}$ alkenyl, aryl and, with R groups linked together through carbon atoms, saturated and unsaturated cyclic hydrocarbon groups. Included in such monomers and comonomers are dicyclopentadiene, norbornene, norbornadiene and 5-(2-propenyl)norbornene. Commercial cyclic olefins are available at various levels of purity, varying in the range of from 92 to 99.9, the upper purity ranges being the result of distillation and further treatment for removal of contaminants and olefins which would be co-polymerized under polymerization conditions. As a general rule, transition metal catalysts employing an alkylaluminium compound as co-catalyst require a high-purity monomer for acceptable polymerization activity, while the use of a tin co-catalyst permits the use of lower purity, technical-grade (83-95%) dicyclopentadiene monomer. An advantage of the invention catalyst is that it is very active in relatively impure (90-95%) dicyclopentadiene.

The invention polymerization process is preferably carried out by reaction injection moulding (RIM), in which a solution of the catalyst, preferably in the monomer liquid to be polymerized, is injected into a mould simultaneously with the monomer, in liquid form, to be polymerized. The catalyst is generally employed in a molar ratio of RIM monomer to transition metal (mole:mole) of from 100:1 to 12,000:1, preferably of from 1000:1 to 8000:1, most preferably of from 2500:1 to 7000:1.

In a preferred RIM polymerization technique, a stream of the transition metal catalyst component in the monomer to be polymerized and a monomer stream containing the tin co-catalyst are combined in the mixing head of a RIM machine just prior to injection of the combined stream into a mould. The boron compound is injected into the mixing head with the transition metal stream, with the co-catalyst stream, or in a separate monomer solution stream.

The initial mould temperature will generally be within the range of from 20 to 130 °C, preferably of from 35 to 100 °C. The mould pressure is generally within the range of from 0.7 to 3.4 bar (10 to 50 psi). After injection of the catalyst and monomer into the mould, there is an interval of time, called the "induction time", before onset of a rapid exotherm from the exothermic polymerization reaction. In a commercial RIM process, this induction time should be sufficiently long to permit filling of the mould, but no longer than 2 minutes, preferably less than thirty seconds. Once the polymerization reaction is initiated, polymerization should occur quite rapidly, usually within 10 seconds to 1 minute, and is accompanied by a rapid rise in temperature.

Various optional components can be present in the reaction mixture during polymerization, including solvents, fillers, anti-oxidants, flame retardants, blowing agents, stabilizers, foaming agents, pigments, plasticizers, reinforcing agents and impact modifiers. Particularly preferred is the addition of from 1 to 10 weight per cent, based on the weight of the monomer, of an elastomer for impact modification of the polymer. These components are most conveniently added to the reaction as constituents of one or more of the reaction mixture streams, as liquids or as solutions in the monomer.

After the polymerization reaction is complete, the moulded object may be subjected to an optional post-cure treatment at a temperature in the range of from 100 to 300 °C for 1 to 24, preferably for 1 to 2 hours. Such a post-cure treatment can enhance certain polymer properties, including glass transition temperature.

The invention process prepares a cross-linked dicyclopentadiene homopolymer or copolymer having excellent physical properties. The present poly(dicyclopentadiene) product is a cross-linked polymer containing at least 90 per cent dicyclopentadiene monomer units and having a flexural strength of at least 724 bar (10,500 psi), preferably greater than 793 bar (11,500 psi), and a Tg of at least 125 °C (DSC at 20 °C/min).

Polymers, prepared in a RIM process using the catalyst of the present invention, have been found to have a high cross-link density and to exhibit a per cent swell in toluene of less than 200, often less than 120 per cent. Such polymers are useful in applications such as structural composites, for example, in the automobile industry, and in electrical applications such as printed circuit boards.

Certain specific embodiments of the invention are described in the following examples, in which dicyclopentadiene was polymerized under laboratory-scale reaction injection moulding conditions using a

tungsten-based catalyst, a tin co-catalyst and a boron promoter. The aryloxy-substituted tungsten catalysts used in the examples were prepared by reacting tungsten hexachloride or tungsten oxytetrachloride or mixtures thereof with two equivalents or a slight excess of 2,6-diisopropylphenol in dry toluene at 25-90 °C under oxygen-free, dry argon and, after the hydrogen chloride by-product had been swept from the reaction, distilling the toluene under vacuum. The residue was dissolved in dry, degassed dicyclopentadiene (93 per cent purity containing up to 7 per cent $C_9$ and $C_{10}$ olefins) to make a 5-8 weight per cent solution (referred to as catalyst master solution). Described procedures were carried out in a nitrogen dry box or under purified argon atmosphere.

Example 1

A 30 ml dried serum bottle with a stir bar was charged with an amount of aryloxy-substituted tungsten hexachloride catalyst master solution to provide 0.059 mmole of tungsten catalyst, an amount of boron trifluoride etherate as a 0.5 weight % solution in dicyclopentadiene (DCPD) to provide 0.030 mmole of the boron compound, and additional dry, degassed dicyclopentadiene (93%) such that the total amount of dicyclopentadiene in the final polymerization mixture was 16 g. To this stirred solution was added by syringe a solution of 0.22 mmole tributyltin hydride in DCPD at room temperature. The mixture was stirred for 20-30 seconds at room temperature, and then placed in an oil bath at 90 °C. The temperature near the centre of the reaction mixture was monitored by means of a thermocouple probe. After six seconds, at which time the temperature in the centre of the reaction mixture had reached 40 °C, a very rapid, exothermic polymerization occurred. After one minute in the bath, the internal temperature of the polymerizing mass had reached a maximum of 189 °C and had begun to decline gradually. These observations are tabulated in Table 1.

Examples 2-10

The polymerizations of examples 2-10 and comparative example A were conducted essentially as described in example 1. In example A, the boron trifluoride etherate was omitted, which resulted in a longer induction time, a higher induction temperature prior to onset of the exothermic polymerization, and a longer time to reach the maximum exothermic temperature compared to the polymerizations which employed boron trifluoride complex. Polymerization mixtures and observations are tabulated in Table 1.

Table 1

| Polymerization of dicyclopentadiene using aryloxy-substituted $WOCl_6$ catalyst | | | | | | | |
|---|---|---|---|---|---|---|---|
| | W comp. | $BF_3(Et_2O)$ | $But_3SnH$ | Induction | | Exotherm Maximum | |
| Example | (mmole) | (mmole) | (mmole) | Time, min. | T, °C | Time, min. | T, °C |
| 1 | 0.059 | 0.030 | 0.22 | 0.1 | 40 | 1.0 | 189 |
| A | 0.059 | -- | 0.22 | 6.4 | 68 | 8.0 | 198 |
| 2 | 0.059 | 0.0062 | 0.22 | 3.8 | <100 | 5.2 | 194 |
| 3 | 0.059 | 0.0116 | 0.22 | 1.9 | 40 | 4.1 | 189 |
| 4 | 0.059 | 0.0124 | 0.22 | 1.4 | 47 | 2.1 | 208 |
| 5 | 0.059 | 0.015 | 0.22 | NR[a] | | | |
| 6 | 0.059 | 0.008 | 0.22 | 1.4 | 48 | 2.0 | 188 |
| 7 | 0.029 | 0.008 | 0.22 | 1.9 | 48 | 3.0 | 190 |
| 8 | 0.029 | 0.0124 | 0.11 | 1.4 | 33 | 2.8 | 196 |
| 9 | 0.029 | 0.015 | 0.11 | NR[a] | | | |
| 10 | 0.0196 | 0.015 | 0.22 | 3.1 | 42 | 4.3 | 203 |

a Boron trifluoride etherate was combined with the tin hydride in DCPD and the combined solution was then immediately added to the solution of tungsten compound in DCPD; the mixture gelled but an exothermic polymerization did not o cur because of incomplete solubility of these samples of boron trifluoride etherate.

Examples 11-37 and comparative examples B-K

The polymerizations shown in Table 2 were conducted essentially as in example 1, except that the aryloxy-substituted tungsten catalyst was prepared from tungsten oxytetrachloride.

Comparative examples B, and E to K were conducted in the absence of boron trifluoride etherate.

Comparative examples C and D were conducted in the absence of tin hydride. Comparative example H employed a low level of tin hydride, which resulted in polymerization after a relatively long induction time. In the presence of boron trifluoride etherate (examples 25 and 26), the induction time was improved substantially for reaction mixtures containing this low level of tin hydride. Examples 27-29 and comparative example I show that a Sn/W mole ratio of about 1:1 resulted in a very sluggish polymerization and a temperature rise not substantially above that of the heating bath, even in the presence of boron trifluoride. Examples 33 and 34 were conducted with dibutylether complex of boron trifluoride in place of the diethylether complex. Examples 35-37 were conducted with boron tribromide in place of boron trifluoride etherate.

Table 2

Polymerization of dicyclopentadiene using aryloxy-substituted $WOCl_4$ catalyst

| Example | W comp. (mmole) | $BF_3(Et_2O)$ (mmole) | $But_3SnH$ (mmole) | Induction Time, min. | Induction T, °C | Exotherm Maximum Time, min. | Exotherm Maximum T, °C |
|---|---|---|---|---|---|---|---|
| B | 0.059 | -- | 0.22 | 3.6 | 53 | 5.1 | 203 |
| 11 | 0.059 | 0.0124 | 0.22 | 2.4 | 39 | 3.9 | 200 |
| 12 | 0.059 | 0.030 | 0.22 | 0.2 | 43 | 1.3 | 156 |
| 13 | 0.059 | 0.059 | 0.22 | 0.2 | 33 | 0.8 | 179 |
| 14 | 0.059 | 0.118 | 0.22 | 0.2 | 33 | 0.8 | 172 |
| C | 0.039 | 0.039 | -- | NR | | | |
| D | 0.039 | 0.078 | -- | NR | | | |
| E | 0.039 | -- | 0.312 | 2.8 | 62 | 3.5 | 196 |
| 15 | 0.039 | 0.0098 | 0.312 | 2.5 | 46 | 3.2 | 187 |
| 16 | 0.039 | 0.0195 | 0.312 | 0.2 | 49 | 0.6 | 185 |
| F | 0.039 | -- | 0.156 | 4.4 | 63 | 5.8 | 209 |
| 17 | 0.039 | 0.019 | 0.156 | 0.6 | 37 | 1.6 | 179 |
| 18 | 0.039 | 0.039 | 0.156 | 0.1 | 35 | 1.0 | 197 |
| G | 0.039 | -- | 0.156 | 4.1 | 54 | 5.6 | 198 |
| 19 | 0.039 | 0.020 | 0.156 | 0.2 | 35 | 1.1 | 193 |
| 20 | 0.039 | 0.020 | 0.156 | 0.8 | 37 | 1.5 | 201 |
| 21 | 0.039 | 0.039 | 0.098 | 0.9 | 37 | 1.5 | 183 |

NE = no exothermic polymerization; gel formation.

NR = little or no polymerization apparent.

Table 2 (Cont'd)

Polymerization of dicyclopentadiene using aryloxy-substituted $WOCl_4$ catalyst

| Example | W comp. (mmole) | $BF_3(Et_2O)$ (mmole) | $But_3SnH$ (mmole) | Induction Time, min. | Induction T, °C | Exotherm Maximum Time, min. | Exotherm Maximum T, °C |
|---|---|---|---|---|---|---|---|
| 22 | 0.039 | 0.0098 | 0.233 | 2.3 | 38 | 3.4 | 198 |
| 23 | 0.039 | 0.0195 | 0.233 | 1.4 | 35 | 2.7 | 189 |
| 24 | 0.039 | 0.039 | 0.233 | 0.5 | 35 | 1.4 | 183 |
| H | 0.039 | -- | 0.079 | 11.8 | 96 | 12.9 | 191 |
| 25 | 0.039 | 0.020 | 0.079 | 1.6 | 44 | 2.7 | 183 |
| 26 | 0.039 | 0.039 | 0.079 | 1.4 | 33 | 2.7 | 201 |
| I | 0.039 | -- | 0.039 | NE | | | |
| 27 | 0.039 | 0.039 | 0.039 | NE | | | |
| 28 | 0.039 | 0.039 | 0.039 | NE | | | |
| 29 | 0.039 | 0.078 | 0.039 | NE | | | |
| 30 | 0.020 | 0.020 | 0.080 | 3.0 | 41 | 4.4 | 177 |
| 31 | 0.020 | 0.040 | 0.080 | 1.9 | 40 | 2.9 | 187 |
| J | 0.017 | -- | 0.039 | NE | | | |
| 32 | 0.017 | 0.020 | 0.039 | 2.4 | 53 | 10.6 | 122 |
| | with $BF_3(But)_2O$ | | | | | | |
| 33 | 0.059 | 0.029 | 0.22 | <0.1 | 25 | 0.3 | 202 |
| 34 | 0.039 | 0.020 | 0.156 | 0.7 | 33 | 1.5 | 194 |

NE = no exothermic polymerization; gel formation.

NR = little or no polymerization apparent.

Table 2 (Cont'd)

Polymerization of dicyclopentadiene using aryloxy-substituted $WOCl_4$ catalyst

| Example | W comp. (mmole) | $BF_3(Et_2O)$ (mmole) | $But_3SnH$ (mmole) | Induction Time, min. | Induction T, °C | Exotherm Maximum Time, min. | Exotherm Maximum T, °C |
|---|---|---|---|---|---|---|---|
| | with $BBr_3$ | | | | | | |
| K | 0.059 | -- | 0.22 | 2.4 | 50 | 3.5 | 206 |
| 35 | 0.059 | 0.059 | 0.22 | 2.2 | 58 | 2.9 | 188 |
| 36 | 0.059 | 0.029 | 0.22 | 2.0 | 64 | 3.2 | 196 |
| 37 | 0.059 | 0.015 | 0.22 | 2.3 | 71 | 3.1 | 220 |

NE = no exothermic polymerization; gel formation.

NR = little or no polymerization apparent.

Examples 38-41 and comparative examples L-P

The polymerizations of these examples were carried out essentially as in example 1, except that the aryloxy-substituted tungsten catalyst was prepared from a mixture of tungsten hexachloride and tungsten oxychloride in a mole ratio of 90/10. Example 38 was carried out with an ethylamine complex of boron

trifluoride in place of the diethylether complex. Examples 39 and M were carried out with triphenyltin hydride in place of tributyltin hydride. Examples 40 and N were carried out with tetrabutyltin in place of tributyltin hydride. Examples 41 and P were carried out with bis(tributyltin)[hexabutylditin] in place of tributyltin hydride.

Table 3

| Polymerization of dicyclopentadiene using aryloxy-substituted $WCl_6/WOCl_4$ catalyst | | | | | | | |
|---|---|---|---|---|---|---|---|
| | W comp. | $BF_3(Et_2O)$ | $But_3SnH$ | Induction | | Exotherm Maximum | |
| Example | (mmole) | (mmole) | (mmole) | Time, min. | T, °C | Time, min. | T, °C |
| L | 0.059 | -- | 0.22 | 3.0 | 97 | 3.8 | 202 |
| | | with $BF_3EtNH_2$ | | | | | |
| 38 | 0.059 | 0.063 | 0.22 | 1.9 | 57 | 2.5 | 208 |
| | | | with $(Ph)_3SnH$ | | | | |
| M | 0.059 | -- | 0.353 | 3.4 | 53 | 4.2 | 227 |
| 39 | 0.059 | 0.059 | 0.353 | 0.2 | 26 | 0.9 | 185 |
| | | | with $(C_4H_9)_4Sn$ | | | | |
| N | 0.059 | -- | 0.353 | NR | | | |
| 40 | 0.059 | 0.059 | 0.353 | NR | | | |
| | | | with $[(C_4H_9)_3Sn-]_2$ | | | | |
| P | 0.059 | -- | 0.353 | NR | | | |
| 41 | 0.059 | 0.059 | 0.353 | NR | | | |

NE = no exothermic polymerization; gel formation.
NR = little or no polymerization apparent.

Example 42

A polymerization was conducted essentially as described in example 1 with tungsten hexachloride (0.059 mmole) in place of the aryloxy-substituted tungsten compound, boron trifluoride etherate (0.059 mmole), and tributyltin hydride (0.354 mmole) in a total of 16g dicyclopentadiene. After 5.9 minutes in the 90 °C bath, at which time the internal temperature of the polymerization mixture was 89 °C, an exothermic polymerization occurred which reached a maximum temperature of 134 °C after an additional 3.7 minutes. By comparison, when the boron trifluoride etherate was omitted, the polymerization conducted with tungsten hexachloride and tributyltin hydride gelled but did not cause a temperature rise substantially above the temperature of the heating bath.

Examples 43-45

The polymerization was conducted similarly to that of examples 11-32, except that, instead of combining the boron trifluoride etherate with the tungsten solution, the boron trifluoride was combined with the tributyltin hydride in dicyclopentadiene before addition to the tungsten compound. In example 43, the solution containing boron trifluoride etherate and tributyltin hydride was prepared and used after one day. In examples 44 and 45, the solution was used in the polymerization after standing at room temperature for two weeks and six weeks, respectively.

Table 4

| Polymerization of dicyclopentadiene using aryloxy-substituted $WOCl_4$ catalyst | | | | | | | |
|---|---|---|---|---|---|---|---|
| | W comp. | $BF_3(Et_2O)$ | $But_3SnH$ | Induction | | Exotherm Maximum | |
| Example | (mmole) | (mmole) | (mmole) | Time, min. | T, °C | Time, min. | T, °C |
| 43 | 0.059 | 0.027 | 0.219 | <0.1 | 25 | 0.4 | 190 |
| 44 | 0.059 | 0.027 | 0.219 | <0.1 | 27 | 0.9 | 195 |
| 45 | 0.059 | 0.027 | 0.027 | <0.1 | 32 | 1.6 | 208 |

Example 46

Using a laboratory-scale RIM moulding apparatus, a poly(dicyclopentadiene) plaque was made by feeding equal volumes of two streams of DCPD monomer (93% purity), one stream containing bis(2,6-diisopropylphenoxy)tungsten oxydichloride catalyst and boron trifluoride butylether complex and the second stream containing tributyltin hydride such that the final moulded part contained 4000:1 DCPD:tungsten catalyst, 4:1 tin hydride:tungsten catalyst, and 1:1 boron trifluoride:tungsten catalyst (mole/mole), to a static mixer and the combined streams immediately injected into a heated (100 °C) aluminium mould with an internal volume of 17.8 x 25.4 x 0.3 $cm^3$ (7 x 10 x 1/8 inches). The mixing time and mould filling was accomplished within 30 seconds, after which time an exotherm occurred within another 30 seconds. After 5 minutes, the polymer was removed from the mould. Physical tests showed the moulded part to have a flexural modulus of 2241 bar (325,000 psi), a flexural strength of 841 bar (12,200 psi, ASTM D790 at room temperature), an Izod impact of 72.6 J/m (1.36 ft-lb/in, ASTM D256), an elongation of >5%, and a glass transition temperature (tan $\delta$) of approximately 128 °C. The polymer showed a swelling in toluene of 91% (immersion for 24 hours at room temperature).

Example 47

Example 47 was conducted essentially as described above in example 46, except that 5% elastomer ("KRATON 1102", "KRATON" is a trademark) was included in the monomer streams and the boron trifluoride:tungsten catalyst ratio was 0.75. Physical tests on this elastomer-modified polymer gave a flexural modulus of 2006 bar (291,000 psi), a flexural strength of 708 bar (10,270 psi), elongation >5%, Izod impact of 641 J/m (12 ft-lb/in), and a swelling in toluene of 109%.

Example 48

The RIM polymerization of example 46 was repeated except omitting the boron trifluoride promoter and using the higher catalyst levels necessary to achieve a similar rate of polymerization in the mould (1300:1 DCPD:tungsten catalyst and 6:1 tin hydride:tungsten catalyst (mole/mole)). The moulder polymer showed a flexural modulus of 21926 bar (318,000 psi), a flexural strength of 614 bar (8,900 psi), an elongation of 3.1%, and a swelling in toluene of 292%. Another plaque moulded under these conditions showed a flexural modulus of 21168 bar (307,000 psi), a flexural strength of 586 bar (8,500 psi), an elongation of 3.0% and an Izod impact of 37.4 J/m (0.70 ft-lb/in). A moulded plaque incorporating 5% "KRATON 1102" elastomer exhibited an Izod impact strength of 411 J/m (7.70 ft-lb/in), a flexural modulus of 18617 bar (270,000 psi) and a flexural strength of 600 bar (8,700 psi).

**Claims**

1. A composition comprising:

(a) a transition metal compound which is the reaction product of a transition metal salt and an alcohol or phenol;

(b) from 1 to 15 moles per mole of the transition metal compound of a compound selected from the group consisting of organoaluminium compounds and organotin hydride compounds; and

(c) a boron halide present in an amount of from 0.001 to 10 moles per mole of the transition metal compound.

2. The composition of claim 1 in which component (a) is a reaction product of a transition metal salt and an alkyl-substituted phenol.

3. The composition of claim 2 in which the phenol is selected from the group consisting of t-butylphenol, t-octylphenol, nonylphenol, 2,6-diisopropylphenol and 2,6-di-tert-butyl-4-methylphenol.

4. The composition of any one of claims 1 to 3, in which the boron halide is present in the composition in an amount within the range of from 0.05 to 2 moles per mole of the transition metal compound.

5. The composition of any one of claims 1 to 4, in which the boron halide is selected from the group consisting of boron trihalides, boron trihalide complexes and tetrahaloborates.

6. The composition of claim 5 in which the boron halide is selected from the group consisting of boron tribromide, boron trifluoride etherate, boron trifluoride ethylamine and boron trifluoride butyrate.

7. The composition of any one of claims 1 to 6, in which the transition metal salt comprises one or more compounds selected from the group consisting of tungsten hexachloride, tungsten oxytetrachloride and molybdenum oxytrichloride.

8. The composition of any one of claims 1 to 7, in which component (b) is a trialkyltin hydride.

9. The composition of claim 8 in which the trialkyltin hydride is selected from the group consisting of tributyltin hydride, triphenyltin hydride and trioctyltin hydride.

10. A process comprising contacting, under polymerization conditions, a cyclic olefin monomer with the composition of any one of claims 1 to 9 for a time sufficient to produce a solid polymer.

11. The process of claim 10 in which the cyclic olefin comprises dicyclopentadiene.

12. A process for in-mould polymerization of a cyclic olefin which comprises:

(a) introducing into a mould a reaction mixture comprising the cyclic olefin, a catalyst comprising an aryloxy-substituted transition metal compound, from 1 to 15 moles per mole of the transition metal compound of a co-catalyst selected from organotin hydride and organoaluminium halides, and from 0.001 to 10 moles of a boron halide, and

(b) maintaining the reaction mixture under polymerization conditions until polymerization of the cyclic olefin and formation of a moulded article is accomplished.

13. The process of claim 12 in which the aryloxy-substituted transition metal compound is the reaction product of a transition metal salt and an alkyl-substituted phenol and the organotin hydride is selected from the group consisting of tributyltin hydride, triphenyltin hydride and trioctyltin hydride.

14. The process of claim 12 or 13 in which the reaction mixture is introduced into a mould at an initial mould temperature within the range of from 20 to 130 °C.

15. The process of any one of claims 12 to 14, in which the reaction mixture is the product of mixing a first stream comprising the aryloxy-substituted transition metal compound and a second stream comprising the organotin hydride, wherein at least one of said first and second streams further comprises the cyclic olefin monomer and at least one of said first and second streams further comprises the boron halide.

16. The process of claim 15 in which at least one of the first and second streams further comprises an elastomer.

17. The polymeric product obtainable by a process as claimed in any one of claims 10 to 16.

18. A poly(dicyclopentadiene) having a flexural strength of at least 724 bar (10,500 psi) and a Tg of at least 125 °C, measured by differential scanning calorimetry at 20 °C/min.

19. A polymer consisting of at least 90% dicyclopentadiene monomer units and having a flexural strength of at least 793 bar (11,500 psi) and a per cent swell in toluene less than 200.